(19) Europäisches Patentamt
European Patent Office
Office européen des brevets

(11) **EP 4 231 384 A1**

(12) **EUROPEAN PATENT APPLICATION**
published in accordance with Art. 153(4) EPC

(43) Date of publication:
**23.08.2023 Bulletin 2023/34**

(21) Application number: **21960114.3**

(22) Date of filing: **28.12.2021**

(51) International Patent Classification (IPC):
**H01M 4/36** (2006.01)

(86) International application number:
**PCT/CN2021/141873**

(87) International publication number:
**WO 2023/122926 (06.07.2023 Gazette 2023/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Contemporary Amperex Technology Co., Limited**
**Ningde City, Fujian 352100 (CN)**

(72) Inventors:
• **SHEN, Chongheng**
**Ningde City, Fujian 352100 (CN)**

• **WU, Qi**
**Ningde City, Fujian 352100 (CN)**
• **HUAN, Shuxing**
**Ningde City, Fujian 352100 (CN)**
• **CHEN, Qiang**
**Ningde City, Fujian 352100 (CN)**
• **LIU, Na**
**Ningde City, Fujian 352100 (CN)**

(74) Representative: **Thoma, Michael**
**Lorenz Seidler Gossel**
**Rechtsanwälte Patentanwälte**
**Partnerschaft mbB**
**Widenmayerstraße 23**
**80538 München (DE)**

(54) **TERNARY PRECURSOR MATERIAL, PREPARATION METHOD THEREFOR AND USE THEREOF**

(57) Embodiments of this application provide a ternary precursor material, a preparation method thereof, and a positive electrode active substance. A ternary precursor material is provided in this application and includes a core and a shell, where (1) the core has a molecular formula of $Ni_xCo_yMn_{1-x-y}(OH)_{2\pm a}$, where $0.8 \leq x < 1.0$, $0 < y < 0.2$, and $0 < a < 0.2$; and the shell includes a doping element; and (2) a deformation stacking fault probability $f_D$ of the ternary precursor material is $\leq 4\%$. With use of the positive electrode active substance prepared by sintering the precursor material, secondary batteries have relatively high gram capacity and cycling performance.

**5**

FIG. 1

**EP 4 231 384 A1**

**Description**

**TECHNICAL FIELD**

This application relates to the field of secondary battery technologies, and in particular, to a ternary precursor material, and a preparation method and an application thereof.

**BACKGROUND**

In recent years, secondary batteries have gained increasingly wide application. For example, the secondary batteries are widely used in energy storage power supply systems such as hydroelectric, thermal, wind, and solar power plants, as well as power tools, electric bicycles, electric motorcycles, electric vehicles, military equipment, aerospace, and other fields. With the wide application of the secondary batteries, a requirement for overall performance of batteries is also increasingly higher. For more application scenarios, traction batteries are required to have high gram capacity and good charge and discharge characteristics.

A positive electrode active substance has great effects on enhancement of energy density of the secondary batteries. Because of high gram capacity, a high-nickel ternary positive electrode active substance is expected to become a next-generation mainstream positive electrode active substance for secondary batteries. However, with an increasing amount of nickel added, the high-nickel positive electrode active material has worse structure stability, further affecting performance of the secondary batteries.

**SUMMARY**

An objective of this application is to provide a ternary precursor material for overcoming disadvantages in the prior art. This application further provides a preparation method of the ternary precursor material, a positive electrode active substance using the ternary precursor material, a secondary battery, a battery module, and a battery pack. For the ternary precursor material provided in this application, stacking fault probability and breakage intensity are creatively introduced as parameters to guide synthesis, and the positive electrode active substance prepared by sintering the precursor material can have both relatively high extractable gram capacity and cycling performance.

To achieve the foregoing objective, a first aspect of this application provides a ternary precursor material, including a core and a shell, where (1) the core has a molecular formula of $Ni_xCo_yMn_{1-x-y}(OH)_{2\pm a}$, where $0.8 \leq x < 1.0$, $0 < y < 0.2$, and $0 < a < 0.2$; and the shell includes a doping element; and (2) a deformation stacking fault probability $f_D$ of the ternary precursor material is $\leq 4\%$.

In the ternary precursor material of this application, the deformation stacking fault probability $f_D$ is $\leq 4\%$, which can greatly stabilize ligating atoms at a tetrahedral center and inhibit formation of vacancies, thereby ensuring that an actual stoichiometric proportion and a transition metal valence are stable, promoting the orderliness and structural stability of the high-nickel ternary positive electrode material, and improving cycling performance. In addition, a high percentage of nickel in the core of a precursor core-shell structure is highly conducive to boosting the extractable gram capacity of the sintered positive electrode material; after being sintered, the doping element enriched in the shell can not only prevent the surface of the active material from corrosion brought by side reaction products of the electrolyte solution to improve high-temperature cycling performance, but also can be used as an excellent $Li^+$ conductor to improve kinetic performance. In an optional embodiment, a breakage rate of particles of the ternary precursor material under a pressure of 1 ton is $\leq 50\%$, and optionally $\leq 25\%$.

In the ternary precursor material of this application, the breakage rate of particles of the material under pressure is further defined so that the obtained ternary precursor material has high mechanical strength, helping to inhibit cracking of the sintered high-nickel ternary positive electrode material under high-temperature cycling and improving cycling performance.

In an optional embodiment, the doping element is selected from one or more of tungsten, antimony, tantalum, molybdenum, yttrium, and magnesium; and/or a mass fraction of the doping element is 1000 ppm to 8000 ppm, and optionally 2000 ppm to 6000 ppm; and/or the doping element is tungsten, which is preferably doped in the form of tungsten oxide.

In the ternary precursor material of this application, the doping element in the shell and the mass fraction of the doping element are further defined and doping the element into the shell can inhibit growth of 101 crystal plane of the ternary precursor material, thereby facilitating growth of 001 crystal plane of the ternary precursor material under high-temperature sintering, and helping to boost the extractable gram capacity of the sintered positive electrode material.

In an optional embodiment, a diameter of the core is 2 $\mu$m to 9 $\mu$m; and/or a thickness of the shell is 0.5 $\mu$m to 4 $\mu$m.

In the ternary precursor material of this application, the diameter of the core and the thickness of the shell are further defined, helping to sinter a high-nickel ternary precursor material having both high extractable gram capacity and high powder pressure-resistant strength.

In an optional embodiment, a particle size $D_v50$ of the ternary precursor material is 3 $\mu$m to 17 $\mu$m, and preferably 6 $\mu$m to 10 $\mu$m; and/or a granularity SPAN value of the ternary precursor material is ≤0.65, and preferably ≤0.45.

In the ternary precursor material of this application, the particle size thereof is also defined, helping to sinter a high-nickel ternary positive electrode material with a high compacted density and to boost the extractable gram capacity of the sintered positive electrode material. Further, the particle size distribution thereof is also defined, helping to improve uniformity of lithium in the sintered high-nickel ternary positive electrode material and ensuring homogeneity of physical and chemical properties. In addition, there are almost no fine particles and micropowder, helping to inhibit gas production and cracking of particles under high temperature.

In an optional embodiment, a BET of the ternary precursor material is 4 $m^2$/g to 16 $m^2$/g, and preferably 8 $m^2$/g to 12 $m^2$/g.

In the ternary precursor material of this application, the BET of the ternary precursor material is further defined, helping to sinter a high-nickel ternary precursor material having both high extractable gram capacity and surface chemical stability.

In an optional embodiment, an intensity ratio of a diffraction peak of the 001 crystal plane of the ternary precursor material to a diffraction peak of the 101 crystal plane thereof is 0.6 to 1.2, and preferably 0.9 to 1.1.

In the ternary precursor material of this application, the intensity ratio of the diffraction peak of the 001 crystal plane of the ternary precursor material to the diffraction peak of the 101 crystal plane thereof is further defined, helping to sinter a high-nickel ternary precursor material with relatively high isotropy.

In an optional embodiment, a length-width ratio of primary particles of the ternary precursor material is 2 to 8.

In the ternary precursor material of this application, the length-width ratio of the doping element of the ternary precursor material is further defined so that doping elements helping to enhance surface structural stability and laminate stacking orderliness are uniformly doped into the shell to improve the cycling performance of the sintered high-nickel ternary precursor material.

A second aspect of this application provides a preparation method of ternary precursor material, where the method includes the following steps:

S1: providing a mixed salt solution, an alkali liquor, ammonium hydroxide, and a doping element salt solution, where the mixed salt solution includes soluble nickel salt, cobalt salt, and manganese salt;

S2: adding pure water into a reactor as a base solution, controlling reaction temperature, performing stirring, and pumping the mixed salt solution, the alkali liquor, and the ammonium hydroxide concurrently into the reactor, to obtain a core slurry of the ternary precursor, where pH and a working concentration of the ammonium hydroxide remain unchanged; and

S3: pumping the doping element salt solution, the alkali liquor, and the ammonium hydroxide concurrently into the reactor to synthesize a slurry of the ternary precursor, and performing drying and sintering to obtain the ternary precursor material, where pH and a concentration of the ammonium hydroxide remain unchanged;

where the ternary precursor material includes a core and a shell, and the core has a molecular formula of $Ni_xCo_yMn_{1-x-y}(OH)_{2\pm a}$, where 0.8≤x<1.0, 0<y<0.2, and 0<a<0.2; and the shell includes a doping element; and a deformation stacking fault probability $f_D$ of the ternary precursor material is ≤4%.

In an optional embodiment, in S2, pH is 9.5 to 10.5, and the working concentration of the ammonium hydroxide is 0.6 mol/L to 1 mol/L, and optionally 0.65 mol/L to 0.75 mol/L; and/or

the reaction temperature is 65°C to 85°C; and/or a stirring speed is 150 rpm to 350 rpm.

In an optional embodiment, in S3, pH is 9.5 to 10.5, and the working concentration of the ammonium hydroxide is 0.65 mol/L to 0.75 mol/L.

The preparation method of this application can be used for preparing an excellent high-nickel ternary positive electrode material with a core-shell structure and can control the difference and percentages of compositions in the core-shell, so as to achieve desired high capacity and high structural stability. In addition, the method of this application has two steps of core formation and core growth in step S2, and can synthesize a radially distributed shell structure on the core, thereby significantly improving the cycling performance of the sintered high-nickel ternary positive electrode material. Further, the working concentration of the ammonium hydroxide in step S2 is controlled so as to effectively reduce the deformation stacking fault probability and breakage degree of the ternary precursor material.

A third aspect of this application provides a positive electrode active substance, including the ternary precursor material, or a ternary precursor material prepared by using the method.

In an optional embodiment, a molar ratio of Li/Me is 0.9 to 1.1, and Me is nickel, cobalt, and manganese.

A fourth aspect of this application provides a secondary battery, including the positive electrode active substance.

A fifth aspect of this application provides a battery module, including the secondary battery.

A sixth aspect of this application provides a battery pack, including the secondary battery or the battery module.

A seventh aspect of this application provides an electric apparatus, including at least one of the secondary battery, the battery module, and the battery pack.

The battery module, the battery pack, and the electric apparatus of this application include the secondary battery provided in this application, and therefore have at least advantages that are the same as those of the secondary battery.

BRIEF DESCRIPTION OF DRAWINGS

To describe the technical solutions in the embodiments of this application more clearly, the following briefly describes the accompanying drawings required for describing the embodiments of this application. Apparently, the accompanying drawings in the following description show merely some embodiments of this application, and persons of ordinary skill in the art may still derive other drawings from the accompanying drawings without creative efforts.

FIG. 1 is a schematic diagram of an embodiment of a secondary battery according to this application.
FIG. 2 is a schematic exploded view of an embodiment of a secondary battery according to this application.
FIG. 3 is a schematic diagram of an embodiment of a battery module according to this application.
FIG. 4 is a schematic diagram of an embodiment of a battery pack according to this application.
FIG. 5 is an exploded view of FIG. 4.
FIG. 6 is a schematic diagram of an electric apparatus using a secondary battery as a power source in an embodiment of this application.

DESCRIPTION OF EMBODIMENTS

The following further describes the embodiments of this application in detail with reference to the accompanying drawings and examples. The detailed description and accompanying drawings of the following embodiments are intended to illustrate the principle of this application, but are not intended to limit the scope of this application. This application is not limited to the embodiments described herein.

In the description of this application, it should be noted that, unless otherwise stated, "a plurality of" means two or more; and the orientations or positional relationships indicated by the terms "upper", "lower", "left", "right", "inside", "outside", and the like are merely intended to help the description of this application and simplify the description rather than to indicate or imply that the apparatuses or components must have specific orientations, or be constructed and manipulated according to specific orientations. These terms shall therefore not be construed as limitations on this application. In addition, the terms "first", "second", and "third", and the like are merely intended for a purpose of description, and shall not be understood as an indication or implication of relative importance. "Perpendicular" means being perpendicular with an allowable range of error other than being strictly perpendicular. "Parallel" means being parallel with an allowable range of error other than being strictly parallel.

The orientation terms appearing in the following description all express orientations shown in the drawings, and do not limit the specific structure of this application. In the description of this application, it should be further noted that unless otherwise specified and defined explicitly, the terms "mount", "connect", and "join" should be understood in their general senses. For example, they may refer to a fixed connection, a detachable connection, or an integral connection, and may refer to a direct connection or an indirect connection via an intermediate medium. A person of ordinary skill in the art can understand specific meanings of these terms in this application as appropriate to specific situations.

**Ternary precursor material and positive electrode active substance**

A first aspect of this application provides a ternary precursor material, including a core and a shell, where (1) the core has a molecular formula of $Ni_xCo_yMn_{1-x-y}(OH)_{2\pm a}$, where $0.8 \leq x < 1.0$, $0 < y < 0.2$, and $0 < a < 0.2$; and the shell includes a doping element; and (2) a deformation stacking fault probability $f_D$ of the ternary precursor material is $\leq 4\%$.

The stacking fault probability $f_D$ induced by crystal deformation is tested and calculated as follows: Firstly, a Bruker D8 Discovery device is used to test an X-ray diffraction pattern of the ternary precursor material, slow scanning is performed at $2\theta$ within the range of $10°$ to $70°$, a scanning speed is preferably $0.5°/min$, and the X-ray diffraction pattern is obtained. Secondly, relevant parameters of (001), (101), and (102) diffraction peaks, obtained by fitting the X-ray diffraction pattern, are taken into the following expression:

$$f_D = 8.89645 \times B_{(101)} \times \frac{\pi}{180} - 1.85325 \times B_{(102)} \times \frac{\pi}{180} - \frac{43.9925}{D_{(001)}};$$

where $B_{(101)}$ is a peak width at half height of the (101) diffraction peak of a precursor, $B_{(102)}$ is a peak width at half height of the (102) diffraction peak of the precursor, and $D_{(001)}$ is a grain size of the (001) diffraction peak of the precursor. Then, corresponding values can be obtained through calculation. Details are given in "Material Characterization and Mechanism of Electrode Process for Green Secondary Batteries", and relevant contents are incorporated herein by reference.

In the ternary precursor material of this application, the deformation stacking fault probability $f_D$ is $\leq 4\%$, which can greatly stabilize ligating atoms at a tetrahedral center and inhibit formation of vacancies, thereby ensuring an actual stoichiometric proportion and a transition metal valence are stable, promoting the orderliness and structural stability of the high-nickel ternary positive electrode material, and improving cycling performance. In addition, a high percentage of nickel in the core of the precursor core-shell structure is highly conducive to boosting the extractable gram capacity of the sintered positive electrode material; after being sintered, the doping element enriched in the shell can not only prevent the surface of the active material from corrosion brought by side reaction products of the electrolyte solution to improve high-temperature cycling performance, but also can be used as an excellent $Li^+$ conductor to improve kinetic performance.

In an optional embodiment, a breakage rate of particles of the ternary precursor material under a pressure of 1 ton is $\leq 50\%$, and optionally $\leq 25\%$. For example, the breakage rate of the particles of the ternary precursor material under the pressure of 1 ton is $\leq 24\%$, $\leq 23\%$, $\leq 22\%$, or $\leq 21\%$.

The breakage rate of the particles of the ternary precursor material under pressure is tested as follows: Firstly, a compacted density test method is used, a particle compression environment is loaded with an external force, and original powder and compressive powder are stored in bags; secondly, two bags of powder are delivered to a laser particle analyzer (Malvern Master Size 3000) for testing, and an indicator $D_v1$ is outputted. Then, data are taken into a breakage rate expression $\Delta D_v1/D_v1=[D_v1$ (before compression) $- D_v1$ (after compression)$]/D_v1$ (before compression) to calculate corresponding values. $D_v1$ is physically defined as a particle size corresponding to a cumulative volume distribution percentage of the material reaching 1%.

In the ternary precursor material of this application, the breakage rate of particles of the material under pressure is further defined so that the obtained ternary precursor material has high mechanical strength, helping to inhibit cracking of the sintered high-nickel ternary positive electrode material under high-temperature cycling and improving cycling performance.

In an optional embodiment, the doping element is selected from one or more of tungsten, antimony, tantalum, molybdenum, yttrium, and magnesium; and/or a mass fraction of the doping element is 1000 ppm to 8000 ppm, and optionally 2000 ppm to 6000 ppm; and/or the doping element is tungsten, which is preferably doped in the form of tungsten oxide.

In an optional embodiment, the mass fraction of the doping element may be understood as being the mass fraction of the doping element accounting for all elements within 10 nm to 100 nm of the shell, and may be determined through combined use of an SEM (Scanning Electron Microscope) and an EDX (Energy Dispersive X-Ray Spectroscopy) by: selecting a range of the shell to be observed in the SEM, switching a probe into an EDX mode, performing single point or single surface scanning in a selected zone, and then performing composition analysis by ticking possible elements, or obtained by other similar manners.

In the ternary precursor material of this application, the doping element in the shell and the mass fraction of the doping element are further defined and doping the element into the shell can inhibit growth of 101 crystal plane of the ternary precursor material, thereby facilitating growth of 001 crystal plane of the ternary precursor material under high-temperature sintering, and helping to boost the extractable gram capacity of the sintered positive electrode material.

In an optional embodiment, a diameter of the core is $2\,\mu m$ to $9\,\mu m$; and/or a thickness of the shell is $0.5\,\mu m$ to $4\,\mu m$.

Thickness test: a sample polished by argon is placed into the SEM, and the core and the shell of the sample can be observed under a reference mode. A core radius is marked by using a scale of the SEM, and runs radically from a particle center to the boundary of a core, where diameter of the core = radius of the core * 2. Similarly, an overall radius being a distance from the center to the shell edge can be obtained, where thickness of the shell = overall radius - radius of the core. 30 particles are taken at any positions in the sample and measured by using the method, and an average value is obtained.

In the ternary precursor material of this application, the diameter of the core and the thickness of the shell are further defined, helping to sinter a high-nickel ternary precursor material having both high extractable gram capacity and high powder pressure-resistant strength.

In an optional embodiment, a particle size $D_v50$ of the ternary precursor material is $3\,\mu m$ to $17\,\mu m$, and preferably $6\,\mu m$ to $10\,\mu m$; and/or a granularity SPAN value of the ternary precursor material is $\leq 0.65$, and preferably $\leq 0.45$.

$D_v50$ may be determined in accordance with standard GB/T 19077.1-2016 by using a laser particle size analyzer (for example, Malvern Master Size 3000). $D_v10$ is physically defined as a particle size corresponding to a cumulative volume distribution percentage of the material reaching 10%; $D_v50$ is physically defined as a particle size corresponding to a cumulative volume distribution percentage of the material reaching 50%; and $D_v90$ is physically defined as a particle size corresponding to a cumulative volume distribution percentage of the material reaching 90%. The granularity SPAN

is $(D_v90-D_v50)/D_v10$.

In the ternary precursor material of this application, the particle size thereof is also defined, helping to sinter a high-nickel ternary positive electrode material with a high compacted density and to boost the extractable gram capacity of the sintered positive electrode material. Further, the particle size distribution thereof is also defined, helping to improve uniformity of lithium in the sintered high-nickel ternary positive electrode material and ensuring homogeneity of physical and chemical properties. In addition, there are almost no fine particles and micropowder, helping to inhibit gas production and cracking of particles under high temperature.

In an optional embodiment, a BET of the ternary precursor material is 4 $m^2/g$ to 16 $m^2/g$, and preferably 8 $m^2/g$ to 12 $m^2/g$.

The specific surface area of the material has a meaning known in the art, and may be measured by using a common instrument and method in the art. For example, it may be tested by using a nitrogen-adsorption specific surface area analysis test method, and calculated by using a BET (Brunauer Emmett Teller) method, where the nitrogen-adsorption specific surface area analysis test may be carried out by using a NOVA 2000e specific surface area and aperture analyzer made by Quantachrome Instruments in the United States. In a specific example, the test method is as follows: 8.000 g to 15.000 g of the material is taken with a weighed empty sample tube, and well stirred and weighed; the sample tube is put into a NOVA 2000e degassing station for degassing; the total mass of the degassed materials and sample tube is weighed; and mass G of the degassed materials is calculated by subtracting the mass of the empty sample tube from the total mass. The sample tube is put into the NOVA 2000e degassing station to measure an adsorption amount of nitrogen on the surface of the material under different relative pressures, and an adsorption amount of a monomolecular layer is calculated based on the Brunauer-Emmett-Teller multilayer adsorption theory and formula. Then a total surface area A of the material is calculated, and a specific surface area of the material is calculated from A/G.

In the ternary precursor material of this application, the BET of the ternary precursor material is further defined, helping to sinter a high-nickel ternary precursor material having both high extractable gram capacity and surface chemical stability.

In an optional embodiment, an intensity ratio of a diffraction peak of the 001 crystal plane of the ternary precursor material to a diffraction peak of the 101 crystal plane thereof is 0.6 to 1.2, and preferably 0.9 to 1.1.

The X-ray diffraction pattern can be obtained by using an X-ray powder diffractometer (X'pert PRO) according to JIS K 0131-1996 "General Principles of X-Ray Diffraction Analysis", then an intensity ratio E of the diffraction peak of the 001 crystal plane of the ternary precursor material to the diffraction peak of the 101 crystal plane thereof is obtained according to $E=I_{(001)}/I_{(101)}$, where $I_{(001)}$ is the peak area of the diffraction peak of the 001 crystal plane. The $2\theta$ angle corresponding to the 001 crystal plane is 17.8° to 22.8°, and the $2\theta$ angle corresponding to the 101 crystal plane is 36.8° to 42.0°.

In the ternary precursor material of this application, the intensity ratio of the diffraction peak of the 001 crystal plane of the ternary precursor material to the diffraction peak of the 101 crystal plane thereof is further defined, helping to sinter a high-nickel ternary precursor material with relatively high isotropy.

In an optional embodiment, a length-width ratio of primary particles of the ternary precursor material is 2 to 8.

The primary particle is a single crystal particle in an aggregate and is usually rectangular in a scanning electron microscope image. The ratio of the length of the primary particle to the width thereof is the length-width ratio. 30 particles are taken at any positions in the sample and measured by using the method, and an average value is obtained.

In the ternary precursor material of this application, the length-width ratio of the doping element of the ternary precursor material is further defined so that doping elements helping to enhance surface structural stability and laminate stacking orderliness are uniformly doped into the shell to improve the cycling performance of the sintered high-nickel ternary precursor material.

In this specification, the length of grains or particles refers to a maximum size of the grains or particles. The morphology of the primary particles can be measured by using an instrument and a method that are well-known in the art, such as scanning electron microscope (for example, Hitachi S-4800 in Japan).

The following describes a preparation method of the ternary precursor material provided in the embodiment of this application. Any one of the foregoing ternary precursor materials can be prepared by using the preparation method.

Different from the prior art, the preparation method of this application includes two steps of core formation and core growth in step S2, and can synthesize a radially distributed shell structure on the core. In addition, it is found in this application that a working concentration of ammonium hydroxide is controlled at 0.6 mol/L to 1 mol/L and preferably 0.65 mol/L to 0.75 mol/L, and is kept unchanged during synthesis, so that the deformation stacking fault probability $f_D$ of the ternary precursor material obtained and the breakage rate of particles of the ternary precursor material under pressure can be significantly reduced, and can meet the requirements of this application.

For example, the method of this application includes the following steps:

S1: providing a mixed salt solution, an alkali liquor, ammonium hydroxide, and a doping element salt solution, where the mixed salt solution includes soluble nickel salt, cobalt salt, and manganese salt;

S2: adding pure water into a reactor as a base solution, controlling reaction temperature, performing stirring, and pumping the mixed salt solution, the alkali liquor, and the ammonium hydroxide into the reactor, to obtain a core slurry of the ternary precursor, where pH remains at 9.5 to 10.5 and the working concentration of the ammonium hydroxide remains at 0.6 mol/L to 1 mol/L; and

S3: performing stirring, and pumping the doping element salt solution, the alkali liquor, and the ammonium hydroxide concurrently into the reactor to synthesize a slurry of the ternary precursor, followed by drying to obtain the ternary precursor material;

where pH remains at 9.5 to 10.5 and the working concentration of the ammonium hydroxide remains at 6.5 mol/L to 1 mol/L.

In an optional embodiment, in step S1, the soluble nickel salt is selected from one or more of nickel sulfate, nickel nitrate, and nickel acetate. The soluble cobalt salt is selected from one or more of cobalt sulfate, cobalt oxalate, cobalt nitrate, and cobaltous acetate. The soluble manganese salt is selected from one or more of manganese sulfate, manganese nitrate, and manganese acetate. The doping element salt solution may be a doping element nitrate solution, a doping element carbonate solution, and the like. For example, tungsten salt is selected from one or more of sodium tungstate and ammonium tungstate.

In an optional embodiment, in step S2, the pure water is added into the reactor as the base solution; after the base solution is added with the ammonium hydroxide and the alkali liquor, pH of the base solution is adjusted to 9.5 to 10.5, and the concentration of the ammonium hydroxide thereof is 0.5 mol/L to 1 mol/L and preferably 0.65 mol/L to 0.75 mol/L; stirring is performed, and a reaction temperature is controlled to be 65°C to 85°C; and a nickel-cobalt-manganese mixed salt solution, the alkali liquor, and the ammonium hydroxide is pumped concurrently into the reactor at a specified flow rate to keep pH and ammonia concentration unchanged. During reaction, inert gas is injected to protect the mixture, and a core slurry of a high-nickel ternary precursor with narrow volume distribution and a stable median particle size $D_v50$ is intermittently synthesized to obtain the core slurry of the ternary precursor.

In an optional embodiment, in step S2, before reaction, the alkali liquor and the ammonium hydroxide are added into the base solution to keep its pH at 9.5 to 10.5 and the concentration of the ammonium hydroxide at 0.5 mol/L to 1 mol/L and preferably at 0.65 mol/L to 0.75 mol/L; and/or the working concentration of the ammonium hydroxide remains at 0.65 mol/L to 0.75 mol/L; and/or the reaction temperature is 65°C to 85°C; and/or a stirring speed is 150 rpm to 350 rpm.

In an optional embodiment, in step S3, the mixture of the doping element salt solution, the alkali liquor, and the ammonium hydroxide is pumped into the reactor at a specified flow rate to keep pH at 9.5 to 10.5 and the concentration of the ammonium hydroxide at 0.5 mol/L to 1 mol/L and preferably at 0.65 mol/L to 0.75 mol/L, and a slurry of the high-nickel ternary precursor with a core-shell structure having narrow volume distribution and a stable median particle size $D_v50$ is intermittently synthesized.

In an optional embodiment, in step S3, the working concentration of the ammonium hydroxide remains at 0.65 mol/L to 0.75 mol/L; and/or the reaction temperature is 65°C to 85°C; and/or the stirring speed is 150 rpm to 350 rpm.

The method of this application includes two steps of core formation and core growth, and can synthesize a radially distributed shell structure on the core, thereby significantly improving the cycling performance of the sintered high-nickel ternary positive electrode material. In addition, the working concentration of the ammonium hydroxide is defined and the feeding method is changed in the method of this application, which can ensure stable synthesis of the high-nickel ternary precursor, thereby preventing process change caused by system fluctuation due to an excessively high concentration.

Next, an embodiment of this application further provides a positive electrode active substance, and the positive electrode active substance is composed of the foregoing ternary precursor material and lithium.

In an example, the foregoing ternary precursor material and a lithium salt are mixed and sintered to obtain the positive electrode active substance.

The ternary precursor material and the lithium salt may be placed into a colter mixer, a high-speed mixer, or an inclined test mixer for mixing. The mixed materials are added to an atmosphere sintering furnace for sintering. Optionally, a sintering atmosphere is an air atmosphere or an oxygen atmosphere; a sintering temperature is 700°C to 900°C; and a sintering time is 10 h to 20 h.

The lithium salt may be one or more of lithium oxide ($Li_2O$), lithium phosphate ($Li_3PO_4$), lithium dihydrogen phosphate ($LiH_2PO_4$), lithium acetate ($CH_3COOLi$), lithium hydroxide ($LiOH$), lithium carbonate ($Li_2CO_3$), and lithium nitrate ($LiNO_3$), but is not limited thereto.

In an optional embodiment, a molar ratio of Li/Me in the positive electrode active substance is 0.9 to 1.1, and Me is nickel, cobalt, and manganese.

In some embodiments, a sintered product may alternatively be crushed and sieved, to obtain a positive electrode active substance with optimized particle size distribution and specific surface area. A crushing method is not particularly limited therein, and can be selected based on actual needs. For example, a particle crusher may be used.

The positive electrode active substance obtained according to the method of this application is of a core-shell structure, where core voids are uniform and particles are radially distributed, and the doping elements are uniformly distributed in the shell. Therefore, the positive electrode active substance can provide relatively high extractable gram capacity, prevent the surface of the active material from corrosion brought by side reaction products of the electrolyte solution to improve high-temperature cycling performance, and can be used as an excellent Li+ conductor to improve kinetic performance and inhibit impedance growth.

**Positive electrode plate**

A second aspect of the embodiments of this application provides a positive electrode plate, and the positive electrode plate uses the positive electrode active substance in the first aspect of the embodiments of this application.

Because the positive electrode active substance in the first aspect of the embodiments of this application is used, the positive electrode plate according to the embodiment of this application enables secondary batteries to have both relatively high gram capacity and cycling performance.

Specifically, the positive electrode plate includes a positive electrode current collector, and a positive electrode active substance layer provided on at least one surface of the positive electrode current collector. For example, the positive electrode current collector includes two opposite surfaces in its thickness direction, and the positive electrode active substance layer is provided on either or both of the two surfaces of the positive electrode current collector.

The positive electrode active substance layer includes the positive electrode active substance in the first aspect of the embodiments of this application.

In addition, the positive electrode active substance layer may further include a conductive agent and a binder. The type of the conductive agent and binder in the positive electrode active substance layer is not specifically limited in this application, and can be selected based on actual needs.

For example, the conductive agent may be one or more of graphite, superconducting carbon, acetylene black, carbon black, Ketjen black, carbon dot, carbon nanotube, graphene, and carbon nanofiber. The binder may be one or more of styrene butadiene rubber (SBR), water-based acrylic resin (water-based acrylic resin), carboxymethyl cellulose (CMC), polyvinylidene fluoride (PVDF), polytetrafluoroethylene (PTFE), polyvinyl butyral (PVB), ethylene-vinyl acetate copolymer (EVA), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, fluorine-containing acrylic resin, and polyvinyl alcohol (PVA).

The positive electrode current collector may be a metal foil or a porous metal plate with good conductivity and mechanical properties. The positive electrode current collector may be made of one or more of aluminum, copper, nickel, titanium, silver, and respective alloys thereof. The positive electrode current collector is, for example, an aluminum foil.

The positive electrode plate may be prepared by using a conventional method in the art. For example, the positive electrode active substance, the conductive agent, and the binder are dispersed in a solvent, where the solvent may be N-methylpyrrolidone (NMP) or deionized water, to form a uniform positive electrode slurry. The positive electrode slurry is applied to the positive electrode current collector, and processes such as drying and roll-in are performed to obtain the positive electrode plate.

**Lithium-ion secondary battery**

A third aspect of the embodiments of this application provides a lithium-ion secondary battery. The lithium-ion battery includes a positive electrode plate, a negative electrode plate, a separator, and an electrolyte, where the positive electrode plate is the positive electrode plate in the second aspect of the embodiments of this application.

Because the positive electrode active substance in the first aspect of the embodiments of this application is used, lithium-ion secondary batteries have both relatively high gram capacity and cycling performance.

The negative electrode plate may be a metal lithium plate.

The negative electrode plate may include a negative electrode current collector, and a negative electrode active substance layer provided on at least one surface of the negative electrode current collector. For example, the negative electrode current collector includes two opposite surfaces in the thickness direction thereof, and the negative electrode active substance layer is provided on either or both of the two surfaces of the negative electrode current collector.

The negative electrode active substance layer includes a negative electrode active material. The embodiments of this application impose no specific limitations on a type of the negative electrode active material, and the negative electrode active material may be selected based on actual needs. For example, the negative electrode active material may be one or more of natural graphite, artificial graphite, mesocarbon microbead (MCMB), hard carbon, soft carbon, silicon, silicon-carbon composite, $SiO_m$ (0<m<2, for example m=1), Li-Sn alloy, Li-Sn-O alloy, Sn, SnO, $SnO_2$, spinel-structure lithium titanate $Li_4Ti_5O_{12}$, Li-Al alloy, and metal lithium.

The negative electrode active substance layer may further include a conductive agent and a binder. The embodiments of this application impose no specific limitations on types of the conductive agent and the binder in the negative electrode active substance layer, and the conductive agent and the binder may be selected based on actual needs. For example, the conductive agent is one or more of graphite, superconducting carbon, acetylene black, carbon black, Ketjen black, carbon dot, carbon nanotube, graphene, and carbon nanofiber. The binder is one or more of styrene butadiene rubber (SBR), polyvinylidene fluoride (PVDF), polytetrafluoroethylene (PTFE), polyvinyl butyral (PVB), water-based acrylic resin (water-based acrylic resin), and carboxymethyl cellulose (CMC).

The negative electrode active substance layer may further optionally include a thickener, such as carboxymethyl cellulose (CMC).

The negative electrode current collector may be metal foil or a porous metal plate with good electrical conductivity and mechanical performance, and may be made of one or more of copper, nickel, titanium, iron, and alloys thereof. The negative electrode current collector is, for example, copper foil.

The negative electrode plate may be prepared by using a conventional method in the art. For example, the negative electrode active material, the conductive agent, the binder, and the thickener are dispersed in a solvent, where the solvent may be N-methylpyrrolidone (NMP) or deionized water, to form a uniform negative electrode slurry. The negative electrode slurry is applied to the negative electrode current collector, and processes such as drying and roll-in are performed to obtain the negative electrode plate.

In the lithium-ion secondary battery in the embodiments of this application, the electrolyte may be a solid electrolyte, such as a polymer electrolyte or an inorganic solid electrolyte, but the electrolyte is not limited thereto. The electrolyte may alternatively be an electrolytic solution. The electrolyte solution includes a solvent and a lithium salt dissolved in the solvent.

The solvent may be a non-aqueous organic solvent, for example, one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), methylmethyl formate (MF), methyl acetate (MA), ethyl acetate (EA), propyl acetate (PA), methyl propionate (MP), ethyl propionate (EP), propyl propionate (PP), methyl butyrate (MB), and ethyl butyrate (EB), and preferably two or more of the foregoing.

The lithium salt may be one or more of $LiPF_6$ (lithium hexafluorophosphate), $LiBF_4$ (lithium tetrafluoroborate), $LiClO_4$ (lithium perchlorate), $LiAsF_6$ (lithium hexafluoroborate), LiFSI (lithium bis(fluorosulfonyl)bisfluorosulfonyl imide), LiTFSI (lithium bis-trifluoromethanesulfonimidetrifluoromethanesulfon imide), LiTFS (lithium trifluoromethanesulfonat), LiDFOB (lithium difluorooxalatoborate), LiBOB (lithium bisoxalatoborate), $LiPO_2F_2$ (lithium difluorophosphate), LiDFOP (lithium difluorophosphate), and LiTFOP (lithium tetrafluoro oxalate phosphate). For example, the lithium salt may be one or more of $LiPF_6$ (lithium hexafluorophosphate), $LiBF_4$ (lithium tetrafluoroborate), LiBOB (lithium bisoxalatoborate), LiDFOB (lithium difluorooxalatoborate), LiTFSI (lithium bis-trifluoromethanesulfonimidetrifluoromethanesulfon imide), and LiFSI (lithium bis(fluorosulfonyl)bisfluorosulfonyl imide).

The electrolyte solution may further optionally include other additives, such as one or more of vinylene carbonate (VC), vinyl ethylene carbonate (VEC), fluoroethylene carbonate (FEC), difluoroethylene carbonate (DFEC), 3,3,3-trifluoropropylene carbonate (TFPC), succinonitrile (SN), adiponitrile (ADN), glutaronitrile (GLN), hexanetrinitrile (HTN), 1,3-propane sultone (1,3-PS), ethylene sulfate (DTD), methylene methyl disulfonate (MMDS), 1-propene-1,3-sultone (PST), 4-methylvinyl sulfate (PCS), 4-ethyl ethylene sulfate (PES), 4-propyl ethylene sulfate (PEGLST), trimethylene sulfate (TS), 1,4-butane sultone (1,4-BS), dioxathiolane 2-oxide (DTO), dimethyl sulfite (DMS), diethyl sulfite (DES), sulfonate cyclic quaternary ammonium salt, tris(trimethylsilyl) phosphate (TMSP), and tris(trimethylsiloxy)boron (TMSB), but is not limited thereto.

The separator is not particularly limited for the lithium-ion secondary battery in the embodiments of this application, and any common porous separators with electrochemical and mechanical stability can be selected, for example, single-layer or multi-layer membranes made of one or more of glass fiber, non-woven fabric, polyethylene (PE), polypropylene (PP), and polyvinylidene fluoride (PVDF).

The positive electrode plate and the negative electrode plate are alternately stacked, and the separator is disposed between the positive electrode plate and the negative electrode plate for isolation, to obtain a battery cell, or the stack may be wound to obtain a battery cell. The battery cell is placed in a shell, the electrolyte solution is injected, and sealing is performed, to obtain a lithium-ion secondary battery.

In some embodiments, the positive electrode plate, the negative electrode plate, and the separator may be made into an electrode assembly through winding or lamination.

In some embodiments, the secondary battery may include an outer package. The outer package may be used for packaging the electrode assembly and the electrolyte.

In some embodiments, the outer package of the secondary battery may be a hard shell, for example, a hard plastic shell, an aluminum shell, or a steel shell. The outer package of the secondary battery may alternatively be a soft pack, for example, a soft pouch. A material of the soft pack may be plastic, for example, one or more of polypropylene (PP), polybutylene terephthalate (PBT), polybutylene succinate (PBS), and the like.

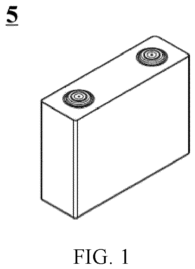

This application imposes no special limitations on a shape of the secondary battery, and the secondary battery may be of a cylindrical shape, a rectangular shape, or of any other shapes. FIG. 1 shows a rectangular secondary battery 5 as an example.

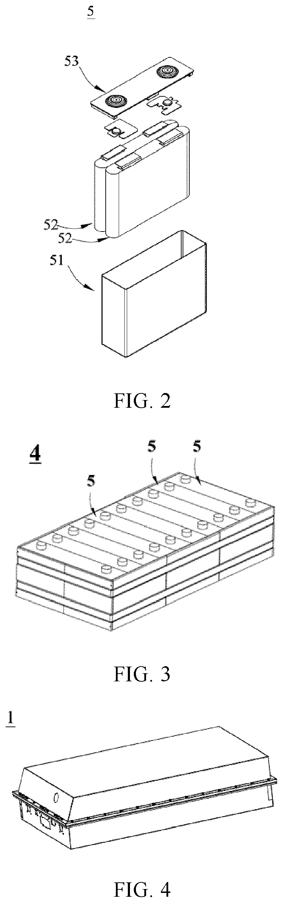

In some embodiments, referring to FIG. 2, the outer package may include a housing 51 and a cover plate 53. The housing 51 may include a base plate and a side plate connected onto the base plate, and the base plate and the side plate enclose an accommodating cavity. The housing 51 has an opening connected to the accommodating cavity, and the cover plate 53 is configured to cover the opening to seal the accommodating cavity. The positive electrode plate, the negative electrode plate, and the separator may be made into an electrode assembly 52 through winding or lamination. The electrode assembly 52 is encapsulated into the accommodating cavity. The electrolyte solution infiltrates the electrode assembly 52. There may be one or more electrode assemblies 52 in the secondary battery 5, and the quantity of the electrode assembly may be adjusted as required.

In some embodiments, the secondary battery may be assembled into a battery module. The battery module may include a plurality of secondary batteries and a specific quantity may be adjusted based on application and capacity of the battery module.

FIG. 3 shows a battery module 4 as an example. Referring to FIG. 3, in the battery module 4, a plurality of secondary batteries 5 may be sequentially arranged in a length direction of the battery module 4. Certainly, the secondary batteries 5 may alternatively be arranged in any other manner. Further, the plurality of secondary batteries 5 may be fastened through fasteners.

Optionally, the battery module 4 may further include a housing with an accommodating space, and the plurality of secondary batteries 5 are accommodated in the accommodating space.

In some embodiments, the battery module may be further assembled into a battery pack, and a quantity of battery modules included in the battery pack may be adjusted based on application and capacity of the battery pack.

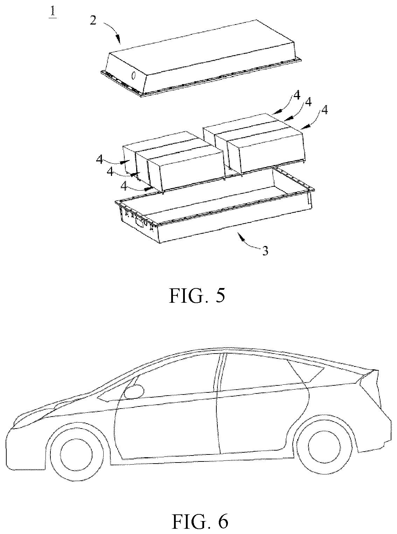

FIG. 4 and FIG. 5 show a battery pack 1 as an example. Referring to FIG. 4 and FIG. 5, the battery pack 1 may include a battery box and a plurality of battery modules 4 arranged in the battery box. The battery box includes an upper box body 2 and a lower box body 3. The upper box body 2 is configured to cover the lower box body 3 to form an enclosed space for accommodating the battery modules 4. The plurality of battery modules 4 may be arranged in the battery box in any manner.

### Electric apparatus

An embodiment of this application further provides an electric apparatus. The electric apparatus includes at least one of the secondary battery, the battery module, or the battery pack according to this application. The secondary battery, the battery module, or the battery pack may be used as a power source for the electric apparatus, or an energy storage unit of the electric apparatus. The electric apparatus may be, but is not limited to, a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite, an energy storage system, and the like.

The secondary battery, the battery module, or the battery pack may be selected for the electric apparatus according to requirements for using the apparatus.

FIG. 6 shows an electric apparatus as an example. The electric apparatus is a battery electric vehicle, a hybrid electric vehicle, a plug-in hybrid electric vehicle, or the like. To satisfy a requirement of the electric apparatus for high power and high energy density, a battery pack or a battery module may be used.

In another example, the electric apparatus may be a mobile phone, a tablet computer, a notebook computer, or the like. The electric apparatus is usually required to be light and thin, and the secondary battery may be used as a power source.

### Examples

Content disclosed in this application is described in detail in the following examples. These examples are intended only for illustrative purposes because various modifications and changes made without departing from the scope of the content disclosed in this application are apparent to those skilled in the art. Unless otherwise stated, all parts, percentages, and ratios reported in the following examples are based on masses, all reagents used in the examples are commercially available or synthesized in a conventional manner, and can be used directly without further treatment, and all instruments used in the embodiments are commercially available.

Preparation of ternary precursor material

Tungsten is served as a doping element, and the tungsten doping concentration in the shell is 6000 ppm.

The preparation method includes:

Nickel sulfate, cobalt sulfate, and manganese sulfate were configured in a molar ratio 8.5: 1:0.5 of Ni:Co:Mn to obtain a 1.5 mol/L mixed salt solution; sodium tungstate was used to configure a 0.75 mol/L tungsten salt solution; and a 5 mol/L NaOH solution was used as an alkali liquor, and a concentration of ammonium hydroxide was 2 mol/L.

10 L deionized water was added into a 20 L crystallization controlled reactor, a specified amount of concentrated ammonium hydroxide was added to reach an ammonium concentration of 0.65 mol/L, and then a specified amount of NaOH solution was added to reach a pH of 10, so as to obtain a base solution.

Under an $N_2$ protective atmosphere, the base solution was heated to 75°C and maintained at that temperature; the mixed salt solution, the alkali liquor, and an ammonia aqueous solution were added concurrently into the base solution at a stirring speed of 350 rpm, where the flow rate of the mixed salt solution was constant, pH of a reaction solution was controlled to be 10, and the concentration of the ammonium hydroxide was 0.65 mol/L; and the mixture was pumped until $D_v50=4$ μm, to obtain a core slurry of the ternary precursor material.

The tungsten salt solution, the alkali liquor, and the ammonia aqueous solution were next added concurrently, pH of the reaction solution was controlled to be 10, and the concentration of the ammonium hydroxide was 0.65 mol/L, to obtain a slurry of a ternary precursor with a core-shell structure. Then, washing and drying were performed to obtain a ternary precursor material.

Parameters of the ternary precursor material, such as diameter of core, thickness of shell, $D_v50$, granularity SPAN value, length-width ratio of primary particles, and BET, were determined.

Preparation of positive electrode active substance

The prepared ternary precursor material and LiOH•$H_2O$ were well mixed at a molar ratio of Li/Me being 1: 1. Then, under a pure oxygen atmosphere, the resulting mixture was sintered in a box-type furnace for 15 h under 800°C, and crushing and sieving were performed to obtain a positive electrode active substance.

Preparation of electrolyte solution

After EC, DEC, and DMC were mixed in a volume ratio of 1:1:1, a solvent was obtained, and then a lithium salt $LiPF_6$ was dissolved in the solvent to obtain an electrolyte solution. A concentration of $LiPF_6$ was 1 mol/L.

Preparation of button cell

The prepared positive electrode active material, conductive carbon black, and a binder PVDF at a weight ratio of 90:5:5 were dispersed in a solvent N-methylpyrrolidone (NMP) and well mixed to obtain a positive electrode slurry. The positive electrode slurry was uniformly applied on a positive electrode current collector aluminum foil, followed by drying and cold pressing, to obtain a positive electrode plate.

In a button battery box, the positive electrode plate, a separator, and a lithium metal plate were stacked in sequence, the foregoing electrolyte solution was injected to assemble the button battery.

Preparation of full cell

The prepared positive electrode active material, a conductive agent acetylene black, and a binder PVDF at a weight ratio of 94:3:3 were dispersed in a solvent NMP and well mixed to obtain a positive electrode slurry. The positive electrode slurry was uniformly applied on a positive electrode current collector aluminum foil, followed by drying and cold pressing, to obtain a positive electrode plate.

A negative electrode active material artificial graphite, hard carbon, a conductive agent acetylene black, a binder styrene butadiene rubber (SBR), and a thickener sodium carboxymethyl cellulose (CMC) at a weight ratio of 90:5:2:2:1 were dispersed in deionized water and well mixed to obtain a negative electrode slurry. The negative electrode slurry was uniformly applied on a negative electrode current collector aluminum foil, followed by drying and cold pressing, to obtain a negative electrode plate.

A polyethylene (PE) porous polymer film was used as the separator. The positive electrode plate, the separator, and the negative electrode plate were stacked in sequence, to obtain a bare cell. The bare cell was placed in an outer package; and the foregoing electrolyte solution was injected and packaging was performed to obtain a full battery.

**Examples 2 to 7**

A difference from Example 1 is that relevant parameters in the preparation steps of the ternary precursor material were changed and an amount of the doping element was adjusted. The deformation stacking fault probability and breakage rate of the prepared ternary precursor material were tested. Parameters of the ternary precursor material, such as diameter of core, thickness of shell, $D_v50$, granularity SPAN value, length-width ratio of primary particles, and BET, were measured with details shown in Table 1 and Table 2, where Table 1 shows relevant parameters in the preparation steps of the ternary precursor material, and Table 2 shows relevant parameters of the obtained ternary precursor material.

**Examples 8 to 10**

A difference from Example 1 is that the type of the doping element was changed. In Example 10 involving in doping of multiple elements, the content of the elements was basically the same, with details as shown in Table 1. The deformation stacking fault probability and breakage rate of the prepared ternary precursor material were tested. Parameters of the ternary precursor material, such as diameter of core, thickness of shell, $D_v50$, granularity SPAN value, length-width ratio of primary particles, and BET, were measured with details shown in Table 1 and Table 2, where Table 1 shows relevant parameters in the preparation steps of the ternary precursor material, and Table 2 shows relevant parameters of the obtained ternary precursor material.

**Examples 11 to 27**

A difference from Example 1 is that relevant parameters in the preparation steps of the ternary precursor material were changed and an amount of the doping element was adjusted. The deformation stacking fault probability and breakage rate of the prepared ternary precursor material were tested. Parameters of the ternary precursor material, such as diameter of core, thickness of shell, $D_v50$, granularity SPAN value, length-width ratio of primary particles, and BET, were measured with details shown in Table 1 and Table 2, where Table 1 shows relevant parameters in the preparation steps of the ternary precursor material, and Table 2 shows relevant parameters of the obtained ternary precursor material.

**Comparative Examples 1 to 4**

A difference from Example 1 is that relevant parameters in preparation steps of the positive electrode active material were changed to change the deformation stacking fault probability or breakage rate of the material; the deformation stacking fault probability and breakage rate of the obtained ternary precursor material were tested; and parameters of the ternary precursor material, such as diameter of core, thickness of shell, $D_v50$, granularity SPAN value, length-width ratio of primary particles, and BET, were measured with details shown in Table 1 and Table 2, where Table 1 shows relevant parameters in the preparation steps of the ternary precursor material, and Table 2 shows relevant parameters of the obtained ternary precursor material.

**Comparative Example 9**

A difference from Example 1 is that no doping element was added.
Nickel sulfate, cobalt sulfate, and manganese sulfate were configured in a molar ratio 8:1:1 of Ni:Co:Mn to obtain a 1.5 mol/L mixed salt solution. A 5 mol/L NaOH solution was used as an alkali liquor, and the concentration of ammonium hydroxide was 2 mol/L.
10 L deionized water was added into a 20 L crystallization controlled reactor, a specified amount of concentrated ammonium hydroxide was added to reach an ammonium concentration of 0.65 mol/L, and then a specified amount of NaOH solution was added to reach a pH of 10, so as to obtain a base solution.
Under an N2 protective atmosphere, the base solution was heated to 70°C and maintained at that temperature; the mixed salt solution, the alkali liquor, and an ammonia aqueous solution was added into the base solution at a stirring speed of 150 rpm, where the flow rate of the mixed salt solution was constant, the pH of a reaction solution was controlled to be 10, and the concentration of the ammonium hydroxide was 0.65 mol/L; and the mixture was pumped until $D_v50=4.5$ $\mu$m. Then, washing and drying were performed to obtain a ternary precursor material.
The deformation stacking fault probability and breakage rate of the prepared ternary precursor material were tested. Parameters of the ternary precursor material, such as diameter of core, thickness of shell, $D_v50$, granularity SPAN value, length-width ratio of primary particles, and BET, were determined with details shown in Table 1 and Table 2, where Table 1 shows relevant parameters in the preparation steps of the ternary precursor material, and Table 2 shows relevant parameters of the obtained ternary precursor material.

Tests

Deformation stacking fault probability $f_D$: Firstly, a Bruker D8 Discovery device was used to test an X-ray diffraction pattern of a ternary precursor material, slow scanning was performed at $2\theta$ within the range of 10° to 70°, a scanning speed was preferably 0.5°/min, and the X-ray diffraction pattern was obtained. Secondly, relevant parameters of (001), (101), and (102) diffraction peaks, obtained by fitting the X-ray diffraction pattern, were taken into the following expression:

$$f_D = 8.89645 \times B_{(101)} \times \frac{\pi}{180} - 1.85325 \times B_{(102)} \times \frac{\pi}{180} - \frac{43.9925}{D_{(001)}}$$

where $B_{(101)}$ was a peak width at half height of the (101) diffraction peak of a precursor, $B_{(102)}$ was a peak width at half height of the (102) diffraction peak of the precursor, and $D_{(001)}$ was a grain size of the (001) diffraction peak of the precursor. Then, corresponding values could be obtained through calculation.

Breakage rate: Firstly, a compacted density test method was used, a particle compression environment was loaded with an external force, and original powder and compressed powder were stored in separate bags; and secondly, two bags of powder were delivered to a laser particle analyzer (Malvern Master Size 3000) for testing, and an indicator $D_v1$ was outputted. Then, data were taken into a breakage rate expression $\Delta D_v1/D_v1=[D_v1$ (before compression) - $D_v1$ (after compression)]/$D_v1$ (before compression) to calculate corresponding values. $D_v1$ is physically defined as a particle size corresponding to a cumulative volume distribution percentage of the material reaching 1%.

Capacity of full battery: A full battery is constant-current charged to 4.25 V at 1/3C under a normal temperature and is constant-current discharged to 2.8 V at 1/3C, to obtain 1/3C gram capacity.

First-cycle efficiency of full battery: During testing of the capacity of a full battery, a ratio of a discharge capacity of the full battery to a charge capacity thereof is a first-cycle coulombic efficiency, namely the first-cycle efficiency of the full battery.

Cycling test of full battery at 45°C: A continuous discharge and charge test at a constant current rate of 1C was performed on a full battery in a 45°C high-low temperature chamber; a capacity after the 30th cycle was recorded; a ratio of that capacity to the first-cycle capacity was a capacity retention rate for 30 cycles; after 30 cycles, a direct-current resistance (DCR) value of the full battery at a high SOC state was recorded, and a ratio of that DCR to the first-cycle DCR minus 1 was a DCR growth rate for 30 cycles. For details about test results, refer to Table 3.

## Table 1

| No. | Doping element salt solution | Concentration of doping element salt solution mol/L | S2 | | | | S3 | |
|---|---|---|---|---|---|---|---|---|
| | | | Ammonium hydroxide | pH | Reaction temperature | Stirring speed | Ammonium hydroxide | pH |
| | | | mol/L | | °C | rpm | mol/L | |
| Example 1 | Sodium tungstate | 0.75 | 0.65 | 10 | 75 | 350 | 0.7 | 10 |
| Example 2 | Sodium tungstate | 0.75 | 0.65 | 10 | 75 | 300 | 0.75 | 10 |
| Example 3 | Sodium tungstate | 0.75 | 0.6 | 10 | 75 | 300 | 0.75 | 10 |
| Example 4 | Sodium tungstate | 0.75 | 0.5 | 10 | 75 | 250 | 0.7 | 10 |
| Example 5 | Sodium tungstate | 0.75 | 1 | 10 | 75 | 250 | 0.7 | 10 |
| Example 6 | Sodium tungstate | 0.75 | 0.65 | 9.5 | 85 | 300 | 0.65 | 10 |
| Example 7 | Sodium tungstate | 0.75 | 0.45 | 10 | 80 | 150 | 0.75 | 10 |
| Example 8 | Ammonium tungstate | 0.75 | 0.65 | 9.5 | 85 | 300 | 0.65 | 10 |
| Example 9 | Sodium antimonate | 0.75 | 0.65 | 9.5 | 85 | 300 | 0.65 | 10 |
| Example 10 | Sodium antimonate + sodium tungstate | 0.75 | 0.65 | 9.5 | 85 | 300 | 0.65 | 10 |
| Example 11 | Sodium tungstate | 0.75 | 0.65 | 9.5 | 85 | 350 | 0.65 | 10 |
| Example 12 | Sodium tungstate | 0.75 | 0.65 | 9.5 | 85 | 200 | 0.65 | 10 |
| Example 13 | Sodium tungstate | 0.75 | 0.75 | 10 | 80 | 200 | 0.65 | 10 |
| Example 14 | Sodium tungstate | 0.75 | 0.75 | 10 | 70 | 200 | 0.65 | 10 |
| Example 15 | Sodium tungstate | 0.75 | 0.75 | 10 | 65 | 200 | 0.65 | 10 |
| Example 16 | Sodium tungstate | 0.75 | 0.65 | 9.5 | 85 | 300 | 0.5 | 9.5 |
| Example 17 | Sodium tungstate | 0.75 | 0.65 | 9.5 | 85 | 300 | 0.6 | 9.5 |
| Example 18 | Sodium tungstate | 0.75 | 0.65 | 9.5 | 85 | 300 | 0.75 | 10 |
| Example 19 | Sodium tungstate | 0.75 | 0.65 | 9.5 | 85 | 300 | 0.9 | 10.5 |
| Example 20 | Sodium tungstate | 0.75 | 0.65 | 9.5 | 85 | 300 | 1 | 10.5 |

EP 4 231 384 A1

| No. | Doping element salt solution | Concentration of doping element salt solution mol/L | S2 | | | | S3 | |
|---|---|---|---|---|---|---|---|---|
| | | | Ammonium hydroxide | pH | Reaction temperature | Stirring speed | Ammonium hydroxide | pH |
| | | | mol/L | | °C | rpm | mol/L | |
| Example 21 | Sodium tungstate | 0.75 | 0.65 | 9.5 | 85 | 300 | 0.65 | 10 |
| Example 22 | Sodium tungstate | 0.75 | 0.65 | 9.5 | 85 | 300 | 0.65 | 10 |
| Example 23 | Sodium tungstate | 0.75 | 0.65 | 9.5 | 85 | 300 | 0.65 | 10 |
| Example 24 | Sodium tungstate | 0.75 | 0.65 | 9.5 | 85 | 300 | 0.65 | 10 |
| Example 25 | Sodium tungstate | 0.75 | 0.65 | 9.5 | 85 | 300 | 0.65 | 10 |
| Example 26 | Sodium tungstate | 0.75 | 0.65 | 9.5 | 85 | 300 | 0.65 | 10 |
| Example 27 | Sodium tungstate | 0.75 | 0.65 | 9.5 | 85 | 300 | 0.65 | 10 |
| Comparative Example 1 | Sodium tungstate | 0.75 | 1.5 | 10 | 75 | 350 | 0.7 | 10 |
| Comparative Example 2 | Sodium tungstate | 0.75 | 0.2 | 10.5 | 65 | 150 | 0.7 | 10 |
| Comparative Example 3 | Sodium tungstate | 0.75 | 0.65 | 8.5 | 65 | 150 | 0.7 | 10 |
| Comparative Example 4 | Sodium tungstate | 0.75 | 0.75 | 11.5 | 75 | 350 | 0.7 | 10 |
| Comparative Example 5 | Sodium tungstate | 0.75 | 0.7 | 10 | 50 | 350 | 0.7 | 10 |
| Comparative Example 6 | Sodium tungstate | 0.75 | 0.7 | 10.5 | 95 | 150 | 0.7 | 10 |
| Comparative Example 7 | Sodium tungstate | 0.75 | 0.7 | 10 | 75 | 50 | 0.7 | 10 |
| Comparative Example 8 | Sodium tungstate | 0.75 | 0.75 | 10.5 | 65 | 550 | 0.7 | 10 |

EP 4 231 384 A1

(continued)

| No. | Preparation process | | | | | | | |
|---|---|---|---|---|---|---|---|---|
| | Doping element salt solution | Concentration of doping element salt solution mol/L | S2 | | | | | S3 |
| | | | Ammonium hydroxide | pH | Reaction temperature | Stirring speed | Ammonium hydroxide | pH |
| | | | mol/L | | °C | rpm | mol/L | |
| Comparative Example 9 | \ | 0.75 | 0.7 | 10 | 75 | 200 | \ | \ |

**Table 2**

| No. | Core molecular formula | Deformation stacking fault probability $f_D$ % | Breakage rate % | Diameter of core μm | Thickness of shell μm | $D_v50$ μm | Granularity SPAN value | Length-width ratio of primary particles | BET $(m^2/g)$ | Amount of doping element |
|---|---|---|---|---|---|---|---|---|---|---|
| Example 1 | $Ni_{0.85}Co_{0.10}Mn_{0.05}(OH)_2$ | 2.02 | 45.9 | 4 | 2 | 8 | 0.4 | 6 | 9 | 6000 |
| Example 2 | $Ni_{0.85}Co_{0.10}Mn_{0.05}(OH)_2$ | 2.50 | 31.7 | 4 | 2.5 | 9 | 0.4 | 6 | 9 | 6000 |
| Example 3 | $Ni_{0.85}Co_{0.10}Mn_{0.05}(OH)_2$ | 1.70 | 37.0 | 4 | 2.5 | 9 | 0.4 | 6 | 9 | 6000 |
| Example 4 | $Ni_{0.85}Co_{0.10}Mn_{0.05}(OH)_2$ | 0.94 | 49.7 | 4 | 2 | 8 | 0.4 | 6 | 9 | 6000 |
| Example 5 | $Ni_{0.85}Co_{0.10}Mn_{0.05}(OH)_2$ | 3.98 | 25.4 | 4 | 2 | 8 | 0.4 | 6 | 9 | 6000 |
| Example 6 | $Ni_{0.85}Co_{0.10}Mn_{0.05}(OH)_2$ | 2.00 | 25 | 3 | 1.5 | 6 | 0.4 | 6 | 14 | 6000 |
| Example 7 | $Ni_{0.85}Co_{0.10}Mn_{0.05}(OH)_2$ | 0.82 | 62.3 | 3.5 | 2.5 | 8.5 | 0.4 | 6 | 9 | 6000 |
| Example 8 | $Ni_{0.85}Co_{0.10}Mn_{0.05}(OH)_2$ | 2.09 | 25.6 | 3 | 1.5 | 6 | 0.4 | 6 | 14 | 6000 |
| Example 9 | $Ni_{0.85}Co_{0.10}Mn_{0.05}(OH)_2$ | 1.95 | 25.3 | 3 | 1.5 | 6 | 0.4 | 6 | 14 | 4000 |
| Example 10 | $Ni_{0.85}Co_{0.10}Mn_{0.05}(OH)_2$ | 1.98 | 25.6 | 3 | 1.5 | 6 | 0.4 | 6 | 14 | 5000 |
| Example 11 | $Ni_{0.85}Co_{0.10}Mn_{0.05}(OH)_2$ | 1.87 | 26.4 | 1.5 | 1.5 | 4.5 | 0.4 | 6 | 15 | 6000 |
| Example 12 | $Ni_{0.85}Co_{0.10}Mn_{0.05}(OH)_2$ | 1.68 | 28.1 | 2 | 1.5 | 5 | 0.4 | 6 | 15 | 6000 |

EP 4 231 384 A1

| No. | Relevant parameters of ternary precursor | | | | | | | | | |
| --- | --- | --- | --- | --- | --- | --- | --- | --- | --- | --- |
| | Core molecular formula | Deformation stacking fault probability $f_D$ % | Breakage rate % | Diameter of core μm | Thickness of shell μm | $D_v$50 μm | Granularity SPAN value | Length-width ratio of primary particles | BET (m²/g) | Amount of doping element |
| Example 13 | $Ni_{0.85}Co_{0.10}Mn_{0.05}(OH)_2$ | 1.75 | 36.2 | 5.5 | 1.5 | 8.5 | 0.4 | 6 | 9 | 6000 |
| Example 14 | $Ni_{0.85}Co_{0.10}Mn_{0.05}(OH)_2$ | 2.08 | 44.3 | 9 | 1.5 | 12 | 0.4 | 6 | 6 | 6000 |
| Example 15 | $Ni_{0.85}Co_{0.10}Mn_{0.05}(OH)_2$ | 2.05 | 49 | 12 | 1.5 | 15 | 0.4 | 6 | 3 | 6000 |
| Example 16 | $Ni_{0.85}Co_{0.10}Mn_{0.05}(OH)_2$ | 1.97 | 24.8 | 3 | 0.2 | 3.4 | 0.4 | 6 | 17 | 6000 |
| Example 17 | $Ni_{0.85}Co_{0.10}Mn_{0.05}(OH)_2$ | 1.99 | 24.9 | 3 | 0.5 | 4 | 0.4 | 6 | 16 | 6000 |
| Example 18 | $Ni_{0.85}Co_{0.10}Mn_{0.05}(OH)_2$ | 2.03 | 25.5 | 3 | 2.5 | 8 | 0.4 | 6 | 9 | 6000 |
| Example 19 | $Ni_{0.85}Co_{0.10}Mn_{0.05}(OH)_2$ | 2.1 | 25.8 | 3 | 3.5 | 10 | 0.4 | 6 | 8 | 6000 |
| Example 20 | $Ni_{0.85}Co_{0.10}Mn_{0.05}(OH)_2$ | 2.21 | 26.7 | 3 | 5 | 13 | 0.4 | 6 | 5 | 6000 |
| Example 21 | $Ni_{0.85}Co_{0.10}Mn_{0.05}(OH)_2$ | 2.00 | 24.6 | 3 | 1.5 | 6 | 0.45 | 6 | 14 | 6000 |
| Example 22 | $Ni_{0.85}Co_{0.10}Mn_{0.05}(OH)_2$ | 2.00 | 24.3 | 3 | 1.5 | 6 | 0.65 | 6 | 14 | 6000 |
| Example 23 | $Ni_{0.85}Co_{0.10}Mn_{0.05}(OH)_2$ | 2.00 | 24 | 3 | 1.5 | 6 | 0.75 | 6 | 14 | 6000 |
| Example 24 | $Ni_{0.85}Co_{0.10}Mn_{0.05}(OH)_2$ | 2.23 | 25 | 3 | 1.5 | 6 | 0.4 | 1.5 | 14 | 800 |
| Example 25 | $Ni_{0.85}Co_{0.10}Mn_{0.05}(OH)_2$ | 2.18 | 25 | 3 | 1.5 | 6 | 0.4 | 2 | 14 | 1000 |

| No. | Relevant parameters of ternary precursor | | | | | | | | | |
| --- | --- | --- | --- | --- | --- | --- | --- | --- | --- | --- |
| | Core molecular formula | Deformation stacking fault probability $f_D$ % | Breakage rate % | Diameter of core μm | Thickness of shell μm | $D_v50$ μm | Granularity SPAN value | Length-width ratio of primary particles | BET ($m^2/g$) | Amount of doping element |
| Example 26 | $Ni_{0.85}Co_{0.10}Mn_{0.05}(OH)_2$ | 1.95 | 25 | 3 | 1.5 | 6 | 0.4 | 8 | 14 | 8000 |
| Example 27 | $Ni_{0.85}Co_{0.10}Mn_{0.05}(OH)_2$ | 1.93 | 25 | 3 | 1.5 | 6 | 0.4 | 8.9 | 14 | 9000 |
| Comparative Example 1 | $Ni_{0.85}Co_{0.10}Mn_{0.05}(OH)_2$ | 4.5 | 50.9 | 7 | 2 | 11 | 0.4 | 6 | 9 | 6000 |
| Comparative Example 2 | $Ni_{0.85}Co_{0.10}Mn_{0.05}(OH)_2$ | 4.03 | 50.7 | 1 | 2 | 5 | 0.4 | 6 | 16 | 6000 |
| Comparative Example 3 | $Ni_{0.85}Co_{0.10}Mn_{0.05}(OH)_2$ | 4.01 | 50.2 | 2.5 | 2 | 6.5 | 0.4 | 6 | 15 | 6000 |
| Comparative Example 4 | $Ni_{0.85}Co_{0.10}Mn_{0.05}(OH)_2$ | 4.21 | 51.2 | 7 | 2 | 11 | 0.4 | 6 | 8 | 6000 |
| Comparative Example 5 | $Ni_{0.85}Co_{0.10}Mn_{0.05}(OH)_2$ | 4.05 | 50.6 | 5 | 2 | 9 | 0.4 | 6 | 9 | 6000 |
| Comparative Example 6 | $Ni_{0.85}Co_{0.10}Mn_{0.05}(OH)_2$ | 4.13 | 50.1 | 5 | 2 | 9 | 0.4 | 6 | 9 | 6000 |
| Comparative Example 7 | $Ni_{0.85}Co_{0.10}Mn_{0.05}(OH)_2$ | 4.1 | 50.1 | 5 | 2 | 9 | 0.4 | 6 | 9 | 6000 |

| No. | Relevant parameters of ternary precursor | | | | | | | | | |
|---|---|---|---|---|---|---|---|---|---|---|
| | Core molecular formula | Deformation stacking fault probability fb % | Breakage rate % | Diameter of core μm | Thickness of shell μm | $D_v50$ μm | Granularity SPAN value | Length-width ratio of primary particles | BET (m²/g) | Amount of doping element |
| Comparative Example 8 | $Ni_{0.85}Co_{0.10}Mn_{0.05}(OH)_2$ | 4.05 | 51.2 | 5 | 2 | 9 | 0.4 | 6 | 9 | 6000 |
| Comparative Example 9 | $Ni_{0.85}Co_{0.10}Mn_{0.05}(OH)_2$ | 4.3 | 30.2 | 5 | 0 | 5 | 0.4 | 2 | 15 | 6000 |

**Table 3**

| No. | Battery performance | | | |
|---|---|---|---|---|
| | Full charge capacity at 1/3C (mAh/g) | First-cycle efficiency (%) | SOH after 40 cycles at 45°C (%) | Direct-current internal resistance growth rate after 40 cycles at 45°C (%) |
| Example 1 | 205 | 88.8 | 97.4 | 3.3 |
| Example 2 | 205 | 88.8 | 97.7 | 2.8 |
| Example 3 | 206 | 88.9 | 97.8 | 3 |
| Example 4 | 207 | 89.1 | 97.8 | 3.5 |
| Example 5 | 202 | 88.5 | 97.4 | 2.6 |
| Example 6 | 208 | 89.3 | 98.5 | 4.5 |
| Example 7 | 207 | 89.4 | 97.1 | 6.7 |
| Example 8 | 208 | 89.2 | 98.2 | 4.7 |
| Example 9 | 208 | 89.5 | 98.3 | 4.8 |
| Example 10 | 209 | 89.5 | 98.2 | 4.6 |
| Example 11 | 209 | 89.6 | 98.3 | 5.2 |
| Example 12 | 209 | 89.7 | 98.2 | 5.6 |
| Example 13 | 206 | 88.8 | 97.9 | 3.1 |
| Example 14 | 203 | 88.1 | 97.6 | 2.4 |
| Example 15 | 201 | 87.5 | 97.5 | 2.1 |
| Example 16 | 211 | 89.7 | 97.8 | 6.2 |
| Example 17 | 210 | 89.5 | 97.8 | 6.4 |
| Example 18 | 205 | 88.8 | 98.4 | 4.4 |
| Example 19 | 204 | 88.6 | 98.4 | 2.9 |
| Example 20 | 201 | 87.6 | 98.3 | 2 |
| Example 21 | 209 | 89.3 | 98.5 | 4.1 |
| Example 22 | 209 | 89.3 | 98.4 | 4.9 |
| Example 23 | 209 | 89.3 | 98.4 | 5.3 |
| Example 24 | 205 | 88.7 | 97.7 | 6.8 |
| Example 25 | 206 | 88.8 | 97.7 | 6.2 |
| Example 26 | 210 | 89.6 | 98.1 | 3.9 |
| Example 27 | 208 | 89.5 | 98.2 | 3.5 |
| Comparative Example 1 | 203 | 88 | 95.9 | 8.3 |
| Comparative Example 2 | 211 | 89.8 | 95.8 | 9.2 |
| Comparative Example 3 | 207 | 88.8 | 95.5 | 10.1 |
| Comparative Example 4 | 202 | 87.8 | 95.7 | 7.7 |

(continued)

| No. | Battery performance | | | |
|---|---|---|---|---|
| | Full charge capacity at 1/3C (mAh/g) | First-cycle efficiency (%) | SOH after 40 cycles at 45°C (%) | Direct-current internal resistance growth rate after 40 cycles at 45°C (%) |
| Comparative Example 5 | 204 | 88 | 95.9 | 7.7 |
| Comparative Example 6 | 204 | 88.1 | 95.8 | 8 |
| Comparative Example 7 | 203 | 88 | 95.9 | 7.5 |
| Comparative Example 8 | 202 | 87.8 | 95.8 | 8.3 |
| Comparative Example 9 | 206 | 88.6 | 95.5 | 9.3 |

It can be seen from Examples 1-7 that a core synthesis process during preparation of the ternary precursor material, namely reaction parameters in S2, is controlled so that the deformation stacking fault probability $f_D$ of the ternary precursor material can be ≤4%. Reduction in the deformation stacking fault probability has improved orderliness and structural stability of the ternary precursor material, thereby improving cycling performance of secondary batteries. Furthermore, the applicant has found that, after being sintered, the doping element can not only prevent the surface of the active material from corrosion brought by side reaction products of the electrolyte solution to improve high-temperature cycling performance, but also can be used as an excellent $Li^+$ conductor to improve kinetic performance.

It can be seen from Examples 8-27 that parameters of the ternary precursor material satisfy a predetermined relationship to further ensure that the positive electrode active material has relatively high structural stability; the breakage rate of particles of the material under pressure is defined so that the obtained ternary precursor material has high mechanical strength, helping to inhibit cracking of the sintered high-nickel ternary positive electrode material under high-temperature cycling and further improving cycling performance.

Comparative Examples 1-8 cannot satisfy various reaction conditions during preparation, so that the deformation stacking fault probability of the ternary precursor material is relatively high. This is unfavorable for boosting the extractable gram capacity of the sintered positive electrode material and improving cycling performance of batteries.

Although this application has been described with reference to the preferred embodiments, various modifications can be made to this application without departing from the scope of this application and the components therein can be replaced with equivalents. In particular, as long as there is no structural conflict, various technical features mentioned in the embodiments can be combined in any manner. This application is not limited to the specific embodiments disclosed in this specification, but includes all technical solutions falling within the scope of the claims.

**Claims**

1. A ternary precursor material, comprising a core and a shell, **characterized in that**:

   (1) the core has a molecular formula of $Ni_xCo_yMn_{1-x-y}(OH)_{2\pm a}$, wherein 0.8≤x<1.0, 0<y<0.2, and 0<a<0.2; and the shell comprises a doping element; and
   (2) a deformation stacking fault probability $f_D$ of the ternary precursor material is ≤4%.

2. The ternary precursor material according to claim 1, wherein a breakage rate of particles of the ternary precursor material under a pressure of 1 ton is ≤50%, and optionally ≤25%.

3. The ternary precursor material according to claim 1 or 2, wherein the doping element is selected from one or more of tungsten, antimony, tantalum, molybdenum, yttrium, and magnesium; and/or
   a mass fraction of the doping element is 1000 ppm to 8000 ppm, and optionally 2000 ppm to 6000 ppm.

4. The ternary precursor material according to any one of claims 1 to 3, wherein a diameter of the core is 2 μm to 9

$\mu$m; and/or
a thickness of the shell is 0.5 $\mu$m to 4 $\mu$m.

5. The ternary precursor material according to any one of claims 1 to 4, wherein a particle size $D_v50$ of the ternary precursor material is 3 $\mu$m to 17 $\mu$m, and preferably 6 $\mu$m to 10 $\mu$m; and/or
a granularity SPAN value of the ternary precursor material is $\leq$0.65, and preferably $\leq$0.45.

6. The ternary precursor material according to any one of claims 1 to 5, wherein a BET of the ternary precursor material is 4 $m^2$/g to 16 $m^2$/g, and preferably 8 $m^2$/g to 12 $m2$/g.

7. The ternary precursor material according to any one of claims 1 to 6, wherein an intensity ratio of a diffraction peak of 001 crystal plane of the ternary precursor material to a diffraction peak of 101 crystal plane thereof is 0.6 to 1.2, and preferably 0.9 to 1.1.

8. The ternary precursor material according to any one of claims 1 to 7, wherein a length-width ratio of primary particles of the ternary precursor material is 2 to 8.

9. A preparation method of ternary precursor material, wherein the method comprises the following steps:

S1: providing a mixed salt solution, an alkali liquor, ammonium hydroxide, and a doping element salt solution, wherein the mixed salt solution comprises soluble nickel salt, cobalt salt, and manganese salt;
S2: adding pure water into a reactor as a base solution, controlling reaction temperature, performing stirring, and pumping the mixed salt solution, the alkali liquor, and the ammonium hydroxide concurrently into the reactor, to obtain a core slurry of the ternary precursor, wherein pH and a working concentration of the ammonium hydroxide remain unchanged; and
S3: pumping the doping element salt solution, the alkali liquor, and the ammonium hydroxide concurrently into the reactor to synthesize a slurry of the ternary precursor, and performing drying and sintering to obtain the ternary precursor material, wherein pH and a concentration of the ammonium hydroxide remain unchanged; wherein the ternary precursor material comprises a core and a shell, and the core has a molecular formula of $Ni_xCo_yMn_{1-x-y}(OH)_{2\pm a}$, wherein 0.8$\leq$x<1.0, 0<y<0.2, and 0<a<0.2; and the shell comprises a doping element; and a deformation stacking fault probability $f_D$ of the ternary precursor material is $\leq$4%.

10. The method according to claim 9, wherein in S2, pH is 9.5 to 10.5, and the working concentration of the ammonium hydroxide is 0.6 mol/L to 1 mol/L, and optionally 0.65 mol/L to 0.75 mol/L; and/or
and/or

the reaction temperature is 65°C to 85°C; and/or
a stirring speed is 150 rpm to 350 rpm.

11. The method according to claim 9 or 10, wherein in S3, pH is 9.5 to 10.5, and the working concentration of the ammonium hydroxide is 0.65 mol/L to 0.75 mol/L.

12. A positive electrode active substance, comprising the ternary precursor material according to any one of claims 1 to 8; or
a ternary precursor material prepared by using the method according to any one of claims 9 to 11.

13. The positive electrode active substance according to claim 13, wherein a molar ratio of Li/Me is 0.9 to 1.1, and Me is nickel, cobalt, and manganese.

14. A secondary battery, comprising the positive electrode active substance according to claim 12 or 13.

15. A battery module, comprising the secondary battery according to claim 14.

16. A battery pack, comprising the secondary battery according to claim 14 or the battery module according to claim 15.

17. An electric apparatus, comprising at least one of the secondary battery according to claim 14, the battery module according to claim 15, and the battery pack according to claim 16.

<u>5</u>

FIG. 1

5

53

52
52

51

FIG. 2

4

5    5

5

FIG. 3

1

FIG. 4

FIG. 5

FIG. 6

## INTERNATIONAL SEARCH REPORT

| International application No. |
|---|
| **PCT/CN2021/141873** |

### A. CLASSIFICATION OF SUBJECT MATTER

H01M 4/36(2006.01)i; H01M 4/485(2010.01)i; H01M 4/505(2010.01)i; H01M 4/525(2010.01)i

According to International Patent Classification (IPC) or to both national classification and IPC

### B. FIELDS SEARCHED

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNTXT; ENTXT; WPABS; DWPI; ENTXTC; CNKI: 三元, 富镍, 高镍, 前驱, 层错, 核, 壳, 掺杂, 氨水, 铵, 浓度, 半峰宽, 衍射峰, 晶面, Ternary, nickel rich, nickel high, precursor, faults, core, shell, doping, ammonia, ammonium, concentration, half width, diffraction peak, crystallographic plane, XRD, "g/L", "10-20", "0.6-1", "mol/L"

### C. DOCUMENTS CONSIDERED TO BE RELEVANT

| Category* | Citation of document, with indication, where appropriate, of the relevant passages | Relevant to claim No. |
|---|---|---|
| Y | CN 112670473 A (CNGR ADVANCED MATERIAL CO., LTD.) 16 April 2021 (2021-04-16) description, paragraphs 5-126 | 1-17 |
| Y | CN 112607788 A (JINGMEN GEM CO., LTD.) 06 April 2021 (2021-04-06) description, paragraphs 3-19 | 1-17 |
| Y | CN 105765770 A (SUMITOMO METAL MINING CO., LTD.) 13 July 2016 (2016-07-13) description, paragraphs 64-236 | 1-17 |
| A | JP 2017199591 A (BASF TODA BATTERY MATERIALS LLC) 02 November 2017 (2017-11-02) entire document | 1-17 |
| A | CN 111244459 A (EAST CHINA UNIVERSITY OF SCIENCE AND TECHNOLOGY et al.) 05 June 2020 (2020-06-05) entire document | 1-17 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **23 August 2022** | **15 September 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/141873**

| Patent document cited in search report | | | Publication date (day/month/year) | Patent family member(s) | | | Publication date (day/month/year) |
|---|---|---|---|---|---|---|---|
| CN | 112670473 | A | 16 April 2021 | None | | | |
| CN | 112607788 | A | 06 April 2021 | None | | | |
| CN | 105765770 | A | 13 July 2016 | US | 2016293952 | A1 | 06 October 2016 |
| | | | | WO | 2015076323 | A1 | 28 May 2015 |
| | | | | JP | 2015122298 | A | 02 July 2015 |
| | | | | JP | 2015122299 | A | 02 July 2015 |
| | | | | CN | 105765770 | B | 05 February 2019 |
| | | | | JP | 6578634 | B2 | 25 September 2019 |
| | | | | JP | 6578635 | B2 | 25 September 2019 |
| | | | | JP | 2019186220 | A | 24 October 2019 |
| | | | | JP | 2019186221 | A | 24 October 2019 |
| | | | | US | 10522830 | B2 | 31 December 2019 |
| | | | | JP | 7001081 | B2 | 19 January 2022 |
| | | | | JP | 7001082 | B2 | 19 January 2022 |
| JP | 2017199591 | A | 02 November 2017 | None | | | |
| CN | 111244459 | A | 05 June 2020 | None | | | |

Form PCT/ISA/210 (patent family annex) (January 2015)